# EUROPÄISCHE PATENTANMELDUNG

(11) **EP 1 734 427 A1**
(43) Veröffentlichungstag der Anmeldung: **20.12.2006**
(21) Anmeldenummer: 06111199.3
(22) Anmeldetag: 15.03.2006
(51) Int. Cl.: G05B 19/042

(54) **Ein- und Ausgabemodul, das für ein gebäudetechnisches System geeignet ist und ein dazugehöriges gebäudetechnisches System**

(30) Priorität: 17.06.2005 DE 102005028187
(71) Anmelder: Honeywell Technologies Sarl ECC, 1110 Morges (CH)
(72) Erfinder: Klimmer, Stefan, 71101, Schönaich (DE); Hohpe, Norbert, 71083, Herrenberg (DE); Latz, Markus, 72184, Eutingen (DE); Kühn, Mario, 71032, Böblingen (DE)
(74) Vertreter: TBK-Patent

(57) **Zusammenfassung**

Gezeigt wird ein Ein- und Ausgabemodul, das zur Kommunikation mit einer Mehrzahl von Feldkomponenten einerseits und mit einer zentralen Steuereinrichtung andererseits eingerichtet ist. Das Ein- und Ausgabemodul umfasst eine lokale Steuereinrichtung, die auf der Grundlage von Erfassungssignalen der Feldkomponenten Informationssignale für die zentrale Steuereinrichtung erzeugen kann, die auf der Grundlage von Stellsignalen der zentralen Steuereinrichtung Ansteuersignale für die Feldkomponenten erzeugen kann, die auf der Grundlage von Erfassungssignalen der Feldkomponenten Ansteuersignale für die Feldkomponenten erzeugen kann und die zur Verwendung einer Schaltlogiktabelle eingerichtet ist.

## Beschreibung

Die Erfindung bezieht sich auf ein Ein- und Ausgabemodul, das für ein gebäudetechnisches System geeignet ist, sowie auf das dazugehörige gebäudetechnische System.

In der EP 1 211 582 A1 ist ein herkömmliches gebäudetechnisches System gezeigt. Dieses System umfasst eine Mehrzahl von Ein- und Ausgabemodulen, die einerseits zur Kommunikation mit einer Mehrzahl von Feldkomponenten geeignet sind, und andererseits mit einer zentralen Steuereinrichtung kommunizieren können. Das dort gezeigte Ein- und Ausgabemodul umfasst auch eine Steuereinrichtung, die auf der Grundlage von Erfassungssignalen der Feldkomponenten Informationssignale für die zentrale Steuereinrichtung und auf der Grundlage von Stellsignalen der zentralen Steuereinrichtung Ansteuersignale für die Feldkomponente erzeugen kann.

Bei dem dort gezeigten System ist die Erzeugung von Stellsignalen für die Feldkomponenten Aufgabe einer zentralen Steuereinrichtung. Dementsprechend müssen sämtliche Erfassungssignale in der Form von gegebenenfalls entsprechend angepassten Informationssignalen an die zentrale Steuereinrichtung übermittelt werden. Die zentrale Steuereinrichtung erzeugt aus den so übermittelten Informationssignalen dann für alle Ein-/Ausgabeeinrichtungen die Stellsignale, die wiederum über ein Bussystem den Ein- und Ausgabemodulen zugeführt werden. Die Ein- und Ausgabemodule formen diese Stellsignale in entsprechende Ansteuersignale für die an sie angeschlossenen Feldkomponenten um und führen diese den entsprechenden Feldkomponenten zu.

Diese Vorgehensweise hat sich grundsätzlich bewährt. Da aber alle Aufgaben stets über die zentrale Steuereinrichtung abgehandelt werden, können im Einzelfall die Ausführungszeiten entsprechend ansteigen. Da darüber hinaus eine einzige Komponente für alle Vorgänge zuständig ist, ist die Systemzuverlässigkeit bzw. damit auch die Systemverfügbarkeit herabgesetzt. Auch weist das Gesamtsystem auf Grund seiner Struktur und seiner Arbeitsweise nur eine begrenzte Flexibilität auf.

Der Erfindung liegt dem gegenüber die Aufgabe zugrunde, ein verbessertes gebäudetechnisches System anzugeben.

Diese Aufgabe soll durch ein verbessertes Ein- und Ausgabemodul gelöst werden.

Dementsprechend ist es ebenfalls Aufgabe der Erfindung, ein verbessertes Ein- und Ausgabemodul anzugeben, das für ein gebäudetechnisches System geeignet ist.

Zur Lösung dieser Aufgaben ist vorgesehen, dass die lokale Steuereinrichtung des Ein- und Ausgabemoduls über die oben genannten Aufgaben hinaus auch Ansteuersignale für die Feldkomponenten auf der Grundlage von Erfassungssignalen derselben oder anderer Feldkomponenten erzeugen kann. Dadurch ist es möglich, die Feldkomponenten unter bestimmten Umständen ohne die zentrale Steuereinrichtung zu betreiben.

Darüber hinaus ist die lokale Steuereinrichtung des Ein-und Ausgabemoduls zur Verwendung einer Schaltlogiktabelle eingerichtet. Dies ist insbesondere mit der Fähigkeit der lokalen Steuereinrichtung zur selbsttätigen Erzeugung von Ansteuersignalen auf der Grundlage von Erfassungssignalen von Bedeutung, da Schaltlogiktabellen eine einfache und schnelle Möglichkeit darstellen, die lokale Steuereinrichtung für individuelle Steueraufgaben zu konfigurieren.

Vorteilhafte Weiterbildungen der Erfindung sind Gegenstand der Unteransprüche.

Insbesondere sind die in den lokalen Steuereinrichtungen vorgesehenen Schaltlogiktabellen über zentrale Anzeige- und Bedienelemente konfigurierbar. Dies ermöglicht eine einfache und individuelle Konfigurierbarkeit lokal weit verstreuter Ein- und Ausgabemodule von einer zentralen Position aus.

Erfindungsgemäß soll die lokale Steuereinrichtung mit Hilfe der Schaltlogiktabellen ebenfalls dynamische Ereignisse berücksichtigen können. Dies wiederum erlaubt die Berücksichtigung von ansteigenden und abfallenden Flanken sowie Datenbusupdates.

In der lokalen Steuereinrichtung kann mittels der Schaltlogiktabelle auch eine Selbsthaltung bewirkt werden, bei der ein Ausgangssignal auch nach Beendigung des dynamischen Ereignisses, das ihm zu Grunde liegt, seinen Zustand behält. Durch die Vorsehung einer Selbsthaltung kann bei Auftreten eines weiteren Ereignisses, das dem bestehenden Ausgangssignale entgegen steht, der Haltezustand auf einfache Art und Weise wieder aufgelöst werden, unabhängig davon, ob das zu dem ursprünglichen Ausgangssignal führende Ereignis stationär oder dynamisch war.

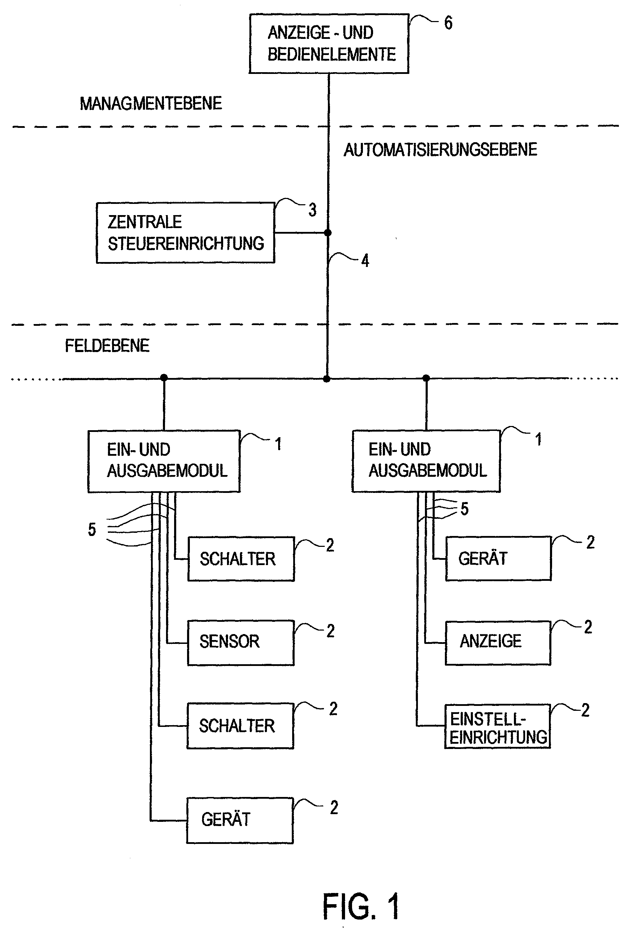

Die Erfindung wird nachfolgend anhand der Figur 1 näher erläutert.

In der Figur 1 ist mit 1 ein Ein- und Ausgabemodul, mit 2 eine Feldkomponente, mit 3 eine zentrale Steuereinrichtung, mit 4 ein Datenbus, mit 5 Anschlussleitungen und mit 6 ein Anzeige- und Bedienelement bezeichnet.

Die Ein- und Ausgabemodule 1 weisen eine nicht gezeigte lokale Steuereinrichtung auf.

Feldkomponenten 2 können z.B. Schalter, Sensoren, Anzeigeelemente für beliebige Anzeigeeinhalte, Einstelleinrichtungen, oder Geräte aller Art sein.

Schalter können Tastschalter oder Stellschalter von beliebiger Konfiguration sein.

Sensoren können Temperatursensoren, Bewegungssensoren, Lichtsensoren oder Ähnliches sein.

Einstelleinrichtungen können Bedienelemente sein, mit denen eine bestimmte Regelgröße kontinuierlich oder stufenweise einstellbar ist, wie beispielsweise die gewünschte Lichtstärke.

Schalter, Sensoren und Einstelleinrichtungen geben Signale ab, die auf Seiten des Ein- und Ausgabemoduls als Erfassungssignal aufgefasst werden können.

Anzeigeelemente können beliebig kompliziert ausgestaltet sein. Je nach Bedarf kann es sich um eine simple Glimmlampe oder um eine Anzeigeeinrichtung mit einem Display von beliebiger Art handeln.

Geräte können sein, Lampen, Lüfter, Klimaanlagen, Rollosteuerungen oder andere in gebäudetechnischen Systemen auftretende Komponenten.

Geräte und Anzeigeeinrichtungen bekommen Ansteuersignale zugeführt, die sie einschalten oder ausschalten oder in irgend einer Form auf eine gewünschte Größe einstellen.

Einige Feldkomponenten können auch sowohl Feldkomponenten sein, die anzusteuern sind, als auch Feldkomponenten, die Ausgangssignale abgeben, die als Erfassungssignale zu verarbeiten sind. Ein Beispiel hierfür ist beispielsweise eine Heizeinrichtung, die einen Temperatursensor umfasst.

Das gezeigte System umfasst in der Feldebene eine Mehrzahl von Ein- und Ausgabemodulen. Ein- und Ausgabemodule 1 und Feldkomponenten 2 sind Bestandteile der Feldebene. Die Feldkomponenten 2 sind mit individuellen Anschlussleitungen an das ihnen zugeordnete Ein- und Ausgabemodul angeschlossen. Diese Anschlussleitungen können im Bedarfsfall digitale oder analoge Signale im Signalspannungsbereich oder Versorgungsspannungsbereich transportieren. Jede Anschlussleitung 5 weist eine der jeweiligen Aufgabe entsprechende Anzahl von Adern auf.

Alle Ein- und Ausgabemodule 1 der Feldebene sind über einen Bus 4 miteinander verbunden, bei dem es sich um ein beliebiges Bussystem handeln kann. Dieses Bussystem weist auch eine Verbindung zu der zentralen Steuereinrichtung 3 der Automatisierungsebene sowie gegebenenfalls auch zu den Anzeige- und Bedienelementen 6 der Managementebene auf.

Selbstverständlich ist das gezeigte System nicht nur drahtgebunden realisierbar. Sowohl die Verbindungsleitungen 5 als auch das Bussystem 4 kann funkgestützt realisiert sein.

Die Anzahl der Ein- und Ausgabemodule sowie die Anzahl der Feldkomponenten pro Ein- und Ausgabemodul ist nicht auf das in der Figur gezeigte Beispiel festgelegt.

Die in der Managementebene vorgesehenen Anzeige- und Bedienelemente 6 umfassen einen Computer, beispielsweise in Form einer Workstation, auf dem ein Programm zur Verfügung steht, mit dem sich alle Ein- und Ausgabemodule konfigurieren lassen.

Die zentrale Steuereinrichtung 3 nimmt schließlich noch zentrale Aufgaben wahr, wie beispielsweise eine Zeitsteuerung. So kann beispielsweise von der zentralen Steuereinrichtung nach einem Zeitprogramm das Licht in vorbestimmten Gebäudeteilen an- und abgeschaltet werden oder beispielsweise eine Heizeinrichtung zwischen Tag- und Nachbetrieb hin und her geschaltet werden.

Die zentrale Steuereinrichtung 3 ist an einer beliebigen Stelle des Gebäudes angeordnet. Dagegen müssen die Anzeige-und Bedienelemente der Managementebene für eine Bedienperson gut zugänglich angeordnet sein.

In der Figur seien nun bei dem linken Ein- und Ausgabemodul zwei Tastschalter sowie eine Lampe und ein Bewegungsmelder angeschlossen.

Mit der konfigurierbaren Schaltlogiktabelle lässt sich z.B. nun eine einfache Lichtsteuerung realisieren, die die zwei Tastschalter enthält, sowie einen zentralen nächtlichen Aus-Befehl ermöglicht, falls das manuelle Ausschalten vor Ort vergessen wurde. Die Vor-Ort-Bedienung muss dabei weiterhin gewährleistet sein.

Eine steigende Flanke von einem der Tastschalter in Kombination mit dem aktuellen Zustand der Lampe, nämlich "Lampe aus", führen zum Gesamtergebnis "true" der Wahrheitstabelle und damit zum Einschalten des entsprechenden Ausgangs. Danach übernimmt eine Selbsthaltung das Halten des Ausganges, solange bis die Selbsthaltung durch entweder ein erneutes Drücken eines der Taster oder durch den Empfang eines zentralen "Off-Updates" ausgelöst. Dadurch wird das Ergebnis der Wahrheitstabelle "false" und der Ausgang der Lampe schaltet wieder aus.

Darüber hinaus kann in der Wahrheitstabelle vorgesehen sein, das bei Ansprechen des Bewegungsmelders und nach Auftreten eines zentralen Abschaltebefehls das Licht für eine vorbestimmte Zeitdauer von beispielsweise 1 Minute eingeschaltet bleibt, bevor es sich selbständig wieder ausschaltet.

Bei reiner Verarbeitung von statischen Zuständen entsprechend dem Stand der Technik könnte in dem obigen Beispiels das Licht nach Einschalten durch einen der Taster von einem zentralen Aus-Befehl nicht erneut ausgeschaltet werden, solange ein früherer zentraler Aus-Befehl, ggf. vom Vortag, noch ansteht. Erst durch Verarbeitung von Ereignissen in Wahrheitstabellen sind konfigurierbare Anwendungen dieser Art möglich. Dies gilt nicht nur für Ein- und Ausgabemodule, sondern auch für die Anwendung von konfigurierbaren Wahrheitstabellen in der Automatisierungsebene.

Gezeigt wird ein Ein- und Ausgabemodul, das zur Kommunikation mit einer Mehrzahl von Feldkomponenten einerseits und mit einer zentralen Steuereinrichtung andererseits eingerichtet ist. Das Ein- und Ausgabemodul umfasst eine lokale Steuereinrichtung, die auf der Grundlage von Erfassungssignalen der Feldkomponenten Informationssignale für die zentrale Steuereinrichtung erzeugen kann, die auf der Grundlage von Stellsignalen der zentralen Steuereinrichtung Ansteuersignale für die Feldkomponenten erzeugen kann, die auf der Grundlage von Erfassungssignalen der Feldkomponenten Ansteuersignale für die Feldkomponenten erzeugen kann und die zur Verwendung einer Schaltlogiktabelle eingerichtet ist.

## Patentansprüche

1. Ein- und Ausgabemodul, insbesondere für ein gebäudetechnisches System,
(a) das zur Kommunikation mit einer Mehrzahl von Feldkomponenten und einer zentralen Steuereinrichtung eingerichtet ist und
(b) das eine lokale Steuereinrichtung umfasst,
(b1) die auf der Grundlage von Erfassungssignalen der Feldkomponenten Informationssignale für die zentrale Steuereinrichtung erzeugen kann,
(b2) die auf der Grundlage von Stellsignalen der zentralen Steuereinrichtung Ansteuersignale für die Feldkomponenten erzeugen kann,
(b3) die auf der Grundlage von Erfassungssignalen der Feldkomponenten Ansteuersignale für die Feldkomponenten erzeugen kann und
(b4) die zur Verwendung einer Schaltlogiktabelle eingerichtet ist.

2. Ein- und Ausgabemodul nach Anspruch 1, **dadurch gekennzeichnet, dass** die Schaltlogiktabelle mit Hilfe von zentralen Anzeige- und Bedienelementen konfigurierbar ist.

3. Ein- und Ausgabemodul nach Anspruch 1 oder 2, **dadurch gekennzeichnet, dass** die lokale Steuereinrichtung mittels der Schaltlogiktabelle dynamische Ereignisse berücksichtigen kann.

4. Ein- und Ausgabemodul nach Anspruch 3, **dadurch gekennzeichnet, dass** die lokale Steuereinrichtung mittels der Schaltlogiktabelle eine Selbsthaltung bewirken kann, bei der ein Ausgangssignal auch nach Beendigung des ihm zu Grunde liegenden Ereignisses seinen Zustand behält, bis ein weiteres Ereignis eintritt, das diesem Zustand entgegen steht.

5. Gebäudetechnisches System mit einem Ein- oder Ausgabemodul nach einem der vorhergehenden Ansprüche.
